# EUROPEAN PATENT SPECIFICATION

(11) **EP 3 508 739 B1**
(45) Date of publication and mention of the grant of the patent: **11.11.2020**
(21) Application number: 18196715.9
(22) Date of filing: 25.09.2018
(51) Int. Cl.: F16B 25/00

(54) **SCREW CAPABLE OF REDUCING DRILLING TORQUE**
SCHRAUBE, DIE IN DER LAGE IST, DAS BOHRMOMENT ZU REDUZIEREN.
VIS APTE À RÉDUIRE LE COUPLE DE FORAGE

(43) Date of publication of application: 10.07.2019
(73) Proprietor: Taiwan Shan Yin International Co., Ltd., Kaohsiung City 806 (TW)
(72) Inventor: Su, Kou-Tsair, 806 Kaohsiung City (TW); Su, Chen-Long, 80053 Kaohsiung City (TW)
(74) Representative: Cabinet Chaillot

(56) References cited:
- US-A1- 2017 284 447

## Description

### 1. Field of the Invention

This invention relates to a screw and relates particularly to a screw capable of reducing drilling torque.

### 2. Description of the Related Art

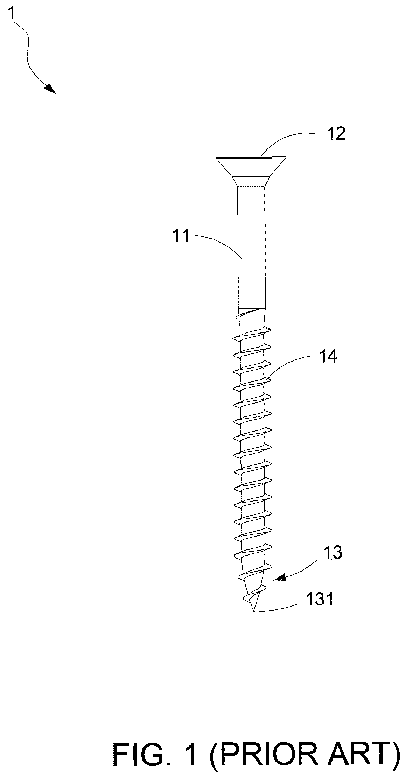

Referring to Fig. **1****,** a conventional screw **1** comprises a shank **11,** a head **12** fitted to one end the shank **11,** a drilling portion **13** fitted to another end of the shank **11** and opposite to the head **12,** and a plurality of threads **14** spirally formed on the shank **11** and extending toward the drilling portion **13.** The drilling portion **13** further tapers off to a tip **131.** During a screwing operation, the tip **131** is situated at a surface of an object (not shown). The head **12** then receives a rotational force in order that the tip **131** synchronously executes the drilling operation of the object via gradually pressing downwards. After the drilling portion **13** gradually screws into the object, the threads **14** continue to execute the cutting operation of the object, thereby threading the shank **11** into the object through the cutting action of the threads **14** and completing the screwing operation of the screw **1.**

However, the disclosed screw **1** still has problems. During the beginning of the screwing operation, the screw **1** only relies on the tip **131** to enter into the object by pressing the object directly that may slow down the screwing operation. The threads **14** which follow the drilling portion **13** to execute the cutting operation of the screw **1** after the drilling portion **13** enters into the object are unable to serve fibers of the object effectively. Meanwhile, the unserved fibers entangle around the shank **11** and the drilling portion **13** easily to result in the increasing drilling torque. Further, debris caused by cutting the object during the screwing operation cannot be excluded smoothly because the fibers accumulate between the screw **1** and the object. Therefore, the screw **1** is hindered from screwing downwards to increase the screwing difficulty. Moreover, the screw **1** may be damaged, blunt, or snapped and the object may crack if the screw **1** keeps screwing downwards and pressing the accumulated debris. Furthermore, the screw **1** engages with the object ineffectively to result in the loose engagement. The screw **1** may loosen, sway, or fall off when the screw **1** is pulled or shaken by external force. Thus, the screwing effect of the screw **1** is poor. The screw **1** still needs to be improved.

US 2017/284447 A1, as shown in Figs. 2 and 7, discloses a screw 10 including at least one helical thread 22 with a peripheral edge 30. The peripheral edge 30 has a plurality of spaced apart notches 38 and notch free portions 36 formed thereon. The notch 38 may be formed as a substantially V-shaped, a flat, or a curvature notch having sides 45 and a bottom 43. In particular, US 2017/284447 A1 discloses a screw according to the preamble of claim 1.

### SUMMARY OF THE INVENTION

The object of this invention is to provide a screw capable of serving fibers effectively to reduce the drilling torque and increase cutting efficiency and accommodating partial debris to attain a preferable engagement and increase the ability of resisting the pulling-out force.

The screw capable of reducing drilling torque of this invention comprises a shank, a head fitted at one end of the shank, a drilling portion fitted at another end of the shank and opposite to the head, and a plurality of cutting threads spiraling on the shank. Each cutting thread has an upper flank surface and a lower flank surface respectively extending outwards from the shank to converge at a thread crest, a plurality of notches formed at the thread crest to define a plurality of crest portions alternating with the notches, and a plurality of grooves recessed on the crest portions to allow each groove to form an upper crest edge and a lower crest edge which contact with the upper flank surface and the lower flank surface respectively. Each notch has a first cutting wall with a first cutting edge, a second cutting wall with a second cutting edge connected to the first cutting edge, and a root formed at a convergence of the first and second cutting walls. Thus, the first and second cutting edges cooperate with the upper and lower crest edges to provide multiple cutting points, thereby increasing the cutting efficiency, breaking fibers of an object effectively to prevent the screw from being entangled in the fibers, and reducing the drilling torque greatly. Further, the notches and grooves help accommodate partial debris, thereby attaining a stable and tight engagement between the screw and the object and increasing the ability of resisting the pulling-out force.

Preferably, the upper and lower flank surfaces of the cutting threads lie like waves rising and falling to allow the cutting threads to form in a wavy arrangement.

Preferably, each groove has two ends extending into the roots of two adjacent notches to thereby define an extensive space whereby the two adjacent grooves are allowed to connect to each other.

Preferably, the first cutting edge of each notch and a second cutting edge of an adjacent notch meet at a point from which a reference line is defined. The first and second cutting edges of each notch respectively slope with respect to the reference line at a first cutting angle and a second cutting angle. The first cutting angle is different from the second cutting angle.

Preferably, the groove defines a baseline passing through a center thereof and normal to an axis of the shank. The upper and lower flank surfaces respectively slope with respect to the baseline at an upper flank angle and a lower flank angle. The upper flank angle is different from the lower flank angle.

Preferably, the screw further includes a plurality of auxiliary threads spirally disposed on the shank. The auxiliary threads are formed without the notches and grooves.

### BRIEF DESCRIPTION OF THE DRAWINGS

Fig. **1** is a schematic view showing a conventional screw;
Fig. **2** is a perspective view showing a first preferred embodiment of this invention;
Fig. **3** is an enlarged view showing a partial element of Fig. 2;
Fig. **4** is a cross-sectional view showing the cutting threads;
Fig. **5** is a perspective view showing the first preferred embodiment of this invention in another direction;
Fig. **6** is a cross-sectional view showing the cutting threads as seen along the line S-S of Fig. 2;
Fig. **7** is a schematic view showing a screwing operation of the first preferred embodiment of this invention;
Fig. **8** is a perspective view showing a second preferred embodiment of this invention characterized by a plurality of extensive spaces;
Fig. **9** is an enlarged view showing a partial element of Fig. 8; and
Fig. **10** is a cross-sectional view showing the cutting threads as seen along the line S-S of Fig. 8.

### DETAILED DESCRIPTION OF THE PREFERRED EMBODIMENTS

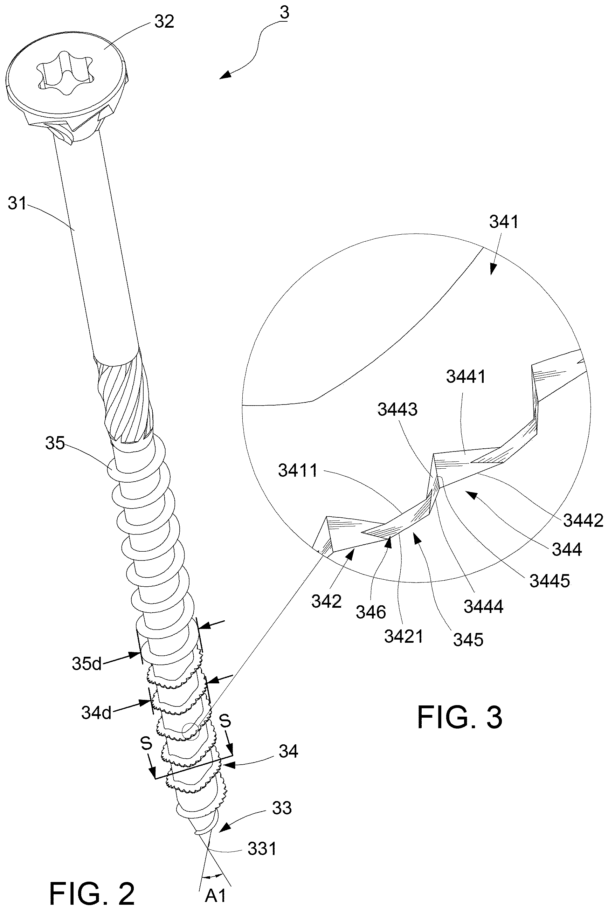

Referring to Fig. **2****,** a first preferred embodiment of a screw **3** capable of reducing drilling torque of this invention is disclosed. The screw **3** includes a shank **31,** a head **32** connected to one side of the shank **31,** a drilling portion **33** formed at another side of the shank **31** and opposite to the head **32,** and a plurality of cutting threads **34** spirally disposed on the shank **31.** The drilling portion **33** tapers off to a tip **331** and further extends outwards to define a drilling angle **A1** which preferably ranges from 22° to 26°. In this preferred embodiment, a plurality of auxiliary threads **35** are spirally formed on the shank **31** between the head **32** and the cutting threads **34** without any notch or groove formed on the auxiliary threads **35.** The cutting threads **34** are preferable to be arranged between the auxiliary threads **35** and the drilling portion **33.** In addition, a diameter **34d** of the cutting threads **34** is smaller than a diameter **35d** of the auxiliary threads **35.**

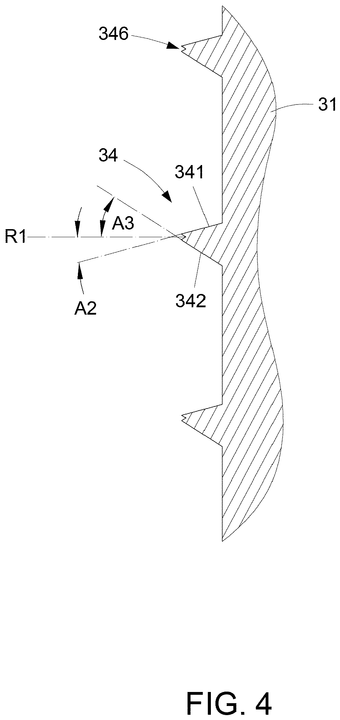

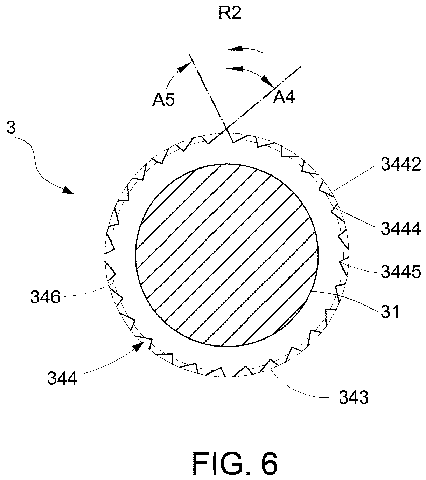

Referring to Fig. **2** and Fig. **3****,** each cutting thread **34** has an upper flank surface **341** extending downwards from the shank **31,** a lower flank surface **342** extending upwards from the shank **31,** a thread crest **343** formed at a convergence of the upper flank surface **341** and the lower flank surface **342** as shown in Fig. **6****,** a plurality of notches **344** carving in the thread crest **343** to divide the cutting threads **34** into a plurality of crest portions **345,** and a plurality of grooves **346** recessing in the crest portions **345** to allow each groove **346** to form an upper crest edge **3411** meeting the upper flank surface **341** and a lower crest edge **3421** meeting the lower flank surface **342.** The thread crest **343** which is shown in phantom lines in Fig. **6** is the original crest of the cutting threads **34** when the cutting threads **34** are provided without any notch **344** and groove **346.** In this preferred embodiment, the upper and lower flank surfaces **341, 342** of the cutting threads **34** are arranged in a form of alternate rises and falls to allow the cutting threads **34** to be in a wavy arrangement. Meanwhile, the notches **344** and the grooves **346** are cross-sectionally arranged in alternation as shown in Fig. **6****.** Referring to Fig. **4****,** the groove **346** defines a baseline **R1** passing through a center of the groove **346** and perpendicular to an axis of the shank **31.** The upper flank surface **341** slants with respect to the baseline **R1** at an upper flank angle **A2.** The lower flank surface **342** slants with respect to the baseline **R1** at a lower flank angle **A3.** The upper flank angle **A2** is different from the lower flank angle **A3.** The upper flank angle **A2** is inclined preferably at 10° and the lower angle **A3** is inclined preferably at 30° .

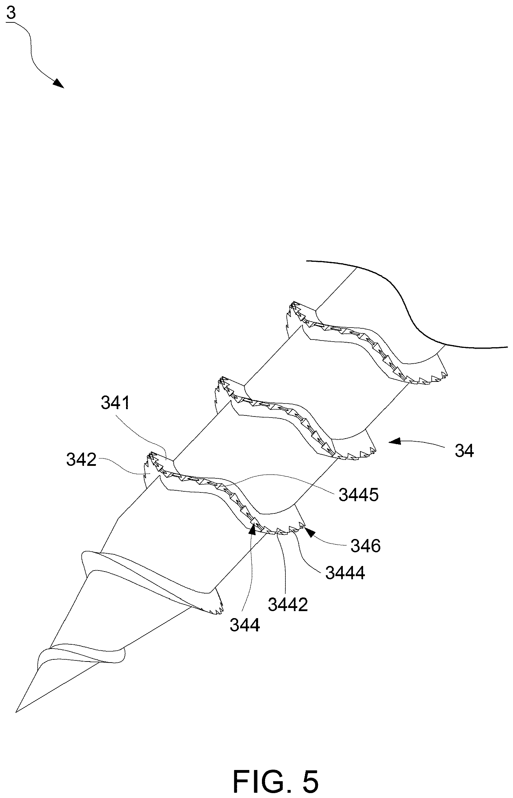

Referring to Fig. **3** and Fig. **5****,** each notch **344** has a first cutting wall **3441** with a first cutting edge **3442** meeting the upper and lower flank surfaces **341, 342,** a second cutting wall **3443** with a second cutting edge **3444** connected to the first cutting edge **3442,** and a root **3445** formed at a convergence of the first and second cutting walls **3441, 3443.** Referring to Fig. **6****,** the first cutting edge **3442** of each notch **344** and a second cutting edge **3444** of an adjacent notch **344** meet at a point where a reference line **R2** is defined. The first cutting edge **3442** and the second cutting edge **3444** of each notch **344** respectively slanting with respect to the reference line **R2** at a first cutting angle **A4** and a second cutting angle **A5.** The first cutting angle **A4** is different from the second cutting angle **A5.** The first cutting angle **A4** is inclined preferably at 60° and the second cutting **A5** is inclined at 30° .

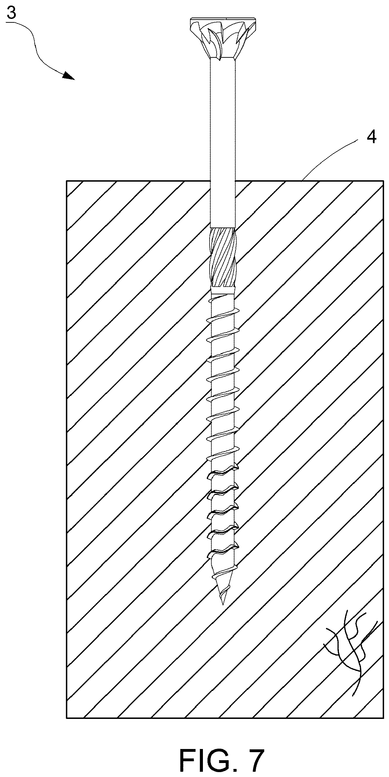

Referring to Fig. **2,** Fig. **3** and Fig. **7****,** a screwing operation of the screw **3** begins with positioning the tip **331** against a surface of an object **4.** Then, the head **32** receives a rotation force from a driving tool (not shown) in order to carry out the drilling action of the tip **331.** The cutting threads **34** then continue to execute the quick cutting operation of the object **4.** Because the first cutting edges **3442,** the second cutting edges **3444,** the upper crest edges **3411,** and the lower crest edges **3421** form multiple cutting points, thereby increasing the cutting efficiency and accelerating the cutting operation. Meanwhile, fibers of the object are served effectively to prevent the shank **31** and the drilling portion **33** from being entangled in the fibers and reduce the drilling torque greatly. In addition, debris caused by cutting the object **4** can be excluded outwards through the cutting threads **34** without being hindered by the unserved fibers, thereby achieving the effect of excluding the debris smoothly and rapidly, attaining the smooth screwing operation, and preventing the object **4** from cracking caused by continuously pressing the accumulated debris. Moreover, the notches **344** and the grooves **346** can properly accommodate and press partial debris, thereby attaining a stable and tight engagement between the screw **3** and the object **4** and increasing the ability of resisting the pulling-out force. Further, the auxiliary threads **35** with the diameter **35d** larger than the diameter **34d** of the cutting threads **34** follow the cutting threads **34** to execute the cutting operation to further achieve the tight engagement.

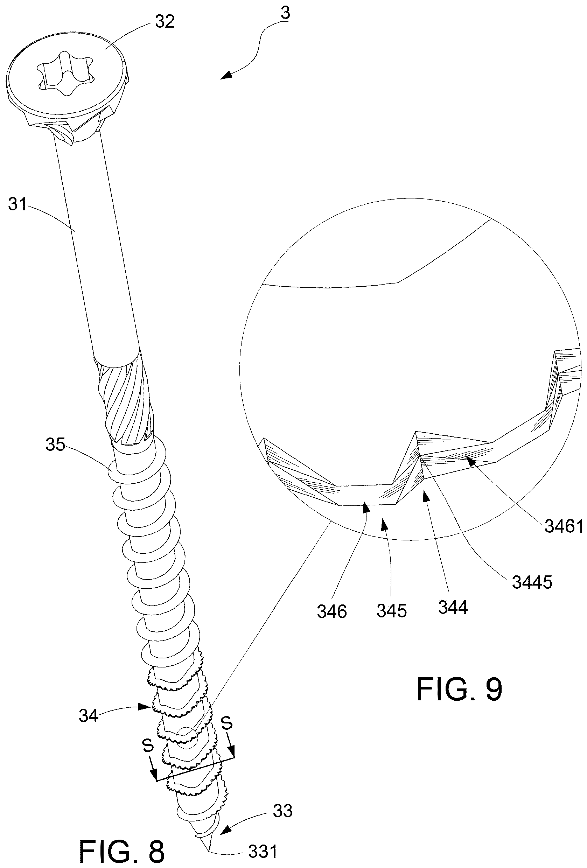

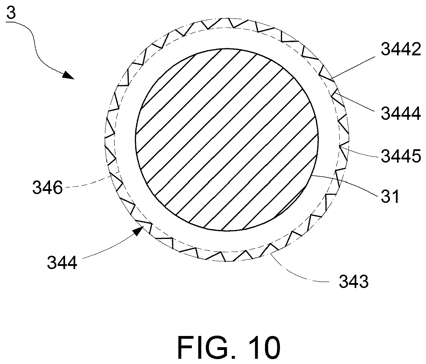

Referring to Fig. **8** to Fig. **10****,** a second preferred embodiment of the screw **3** of this invention is shown. The correlated elements and the concatenation of elements, the operation and objectives of the second preferred embodiment are the same as those of the first preferred embodiment. This embodiment is characterized in that each groove **346** recessedly formed on each crest portion **345** has two ends extending into two adjacent notches **344** respectively and reaching the roots **3445** of the two adjacent notches **344** to thereby define an extensive space **3461.** The two adjacent grooves **346** are connected to each other by the extensive space **3461.** The enlarged extensive space **3461** allows the groove **346** to guide the debris and exclude the debris quickly. Further, the extensive space **3461** can accommodate more debris, thereby achieving the tighter engagement between the screw **3** and the object **4** and increasing the ability of resisting the pulling-out force.

To sum up, the screw capable of reducing drilling torque of this invention takes advantages of the first and second cutting edges and the upper and lower crest edges to provide multiple cutting points, thereby increasing the cutting efficiency, breaking the fibers effectively to prevent the improper entanglement of the fibers around the screw, and reducing the drilling torque for easier screwing. Further, the notches and grooves accommodate and press partial debris for obtaining the stable and tight engagement between the screw and the object and increasing the ability of resisting the pulling-out force.

While the embodiments of this invention are shown and described, it is understood that further variations and modifications may be made without departing from the scope of this invention.

## Claims

1. A screw (3) capable of reducing drilling torque comprising a shank (31), a head (32) disposed at one end of said shank (31), a drilling portion (33) disposed at another end of said shank (31) and located opposite to said head (32), and a plurality of cutting threads (34) spirally disposed on said shank (31), wherein each of said plurality of cutting threads (34) includes an upper flank surface (341), a lower flank surface (342) opposite to said upper flank surface (341), and a thread crest (343) formed at a convergence of said upper and lower flank surfaces (341, 342),
a plurality of notches (344) cutting into said thread crest (343) to thereby define a plurality of spaced apart crest portions (345), each of said plurality of crest portions (345) being formed between every two adjacent notches (344), each of said plurality of notches (344) having a first cutting wall (3441) and a second cutting wall (3443) which converge at a root (3445), said first cutting wall (3441) being provided with a first cutting edge (3442) meeting both of said upper and lower flank surfaces (341, 342), said second cutting wall (3443) being provided with a second cutting edge (3444) connected to said first cutting edge (3442);
**characterized in that** a plurality of grooves (346) being recessedly formed on said plurality of crest portions (345) to thereby allow each of said grooves (346) to form an upper crest edge (3411) and a lower crest edge (3421) which meet said upper flank surface (341) and said lower flank surface (342) respectively, said plurality of notches (344) and said plurality of grooves (346) being cross-sectionally arranged in alternation.

2. The screw (3) as claimed in claim 1, wherein said upper flank surface (341) and said lower flank surface (342) of said cutting threads (34) lie in a form of alternate rises and falls to allow said cutting threads (34) to be in a wavy arrangement.

3. The screw (3) as claimed in claim 1, wherein each of said plurality of grooves (346) has two ends extending into two adjacent notches (344) respectively and reaching said respective roots (3445) of said every two adjacent notches (344) to thereby define an extensive space (3461) between said every two adjacent notches (344), said extensive space (3461) of one of two adjacent grooves (346) being communicated with said extensive space (3461) of another one of said two adjacent grooves (346) to thereby allow said two adjacent grooves (346) to be connected to each other.

4. The screw (3) as claimed in claim 1, wherein said first cutting edge (3442) of one of said every two adjacent notches (344) and said second cutting edge (3444) of another one of said every two adjacent notches (344) meet at a point from which a reference line (R2) is defined, said first cutting edge (3442) sloping with respect to said reference line (R2) at a first cutting angle (A4), said second cutting edge (3444) sloping with respect to said reference line (R2) at a second cutting angle (A5), said first cutting angle (A4) and said second cutting angle (A5) being different.

5. The screw (3) as claimed in claim 1, wherein a baseline (R1) is defined by passing through a center of each of said plurality of grooves (346) and is normal to an axis of said shank (31), said upper flank surface (341) sloping with respect to said baseline (R1) at an upper flank angle (A2), said lower flank surface (342) sloping with respect to said baseline (R1) at a lower flank angle (A3), said upper flank angle (A2) and said lower flank angle (A3) being different.

6. The screw (3) as claimed in claim 1, further including a plurality of auxiliary threads (35) spirally disposed on said shank (31), said plurality of auxiliary threads (35) being formed without said plurality of notches (344) and said plurality of grooves (346).

## Patentansprüche

1. Schraube (3), die in der Lage ist, das Bohrmoment zu reduzieren, umfassend einen Schaft (31), einen Kopf (32), der an einem Ende des Schafts (31) angeordnet ist, einen Bohrabschnitt (33), der an einem anderen Ende des Schafts (31) angeordnet ist und sich gegenüber dem Kopf (32) befindet, und eine Vielzahl von Schneidegewinden (34), die spiralförmig auf dem Schaft (31) angeordnet ist, wobei jede der Vielzahl von Schneideköpfen (34) eine obere Flankenfläche (341), eine untere Flankenfläche (342) gegenüber der oberen Flankenfläche (341) und eine Gewindespitze (343) umfasst, die an einer Konvergenz der oberen und unteren Flankenfläche (341, 342) gebildet ist,
eine Vielzahl von Kerben (344), die in die Gewindespitze (343) schneiden, um dadurch eine Vielzahl von voneinander beabstandeten Spitzenabschnitten (345) zu definieren, wobei jeder der Vielzahl von Spitzenabschnitten (345) zwischen jeweils zwei benachbarten Kerben (344) gebildet ist, wobei jede der Vielzahl von Kernben (344) eine erste Schneidewand (3441) und eine zweite Schneidewand (3443) aufweist, die an einer Wurzel (3445) konvergieren, wobei die erste Schneidewand (3441) mit einer ersten Schneidekante (3442) ausgestattet ist, die sowohl auf die obere als auch auf die untere Flankenfläche (341, 342) trifft, wobei die zweite Schneidewand (3443) mit einer zweiten Schneidekante (3444) ausgestattet ist, die mit der ersten Schneidekante (3442) verbunden ist;
**dadurch gekennzeichnet, dass** eine Vielzahl von Nuten (346) vertieft auf der Vielzahl von Spitzenabschnitten (345) gebildet ist, um dadurch jeder der Nuten (346) zu ermöglichen, eine obere Spitzenkante (3411) und eine untere Spitzenkante (3421) zu bilden, die sich auf der oberen Flankenfläche (341) bzw. der unteren Flankenfläche (342) treffen, wobei die Vielzahl von Kerben (344) und die Vielzahl von Nuten (346) querschnittlich abwechselnd angeordnet sind.

2. Schraube (3) nach Anspruch 1, wobei die obere Flankenfläche (341) und die untere Flankenfläche (342) der Schneidegewinde (34) in einer Form von alternierenden Erhebungen und Absenkungen liegen, um zu ermöglichen, dass sich die Schneidegewinde (34) in einer wellenförmigen Anordnung befinden.

3. Schraube (3) nach Anspruch 1, wobei jede der Vielzahl von Nuten (346) zwei Enden aufweist, die sich jeweils in zwei benachbarte Kerben (344) erstrecken und die entsprechenden Wurzeln (3445) der jeweils zwei benachbarten Kerben (344) erreichen, um dadurch einen beträchtlichen Raum (3461) zwischen den jeweils zwei benachbarten Kerben (344) zu definieren, wobei der beträchtliche Raum (3461) einer der zwei benachbarten Nuten (346) mit dem beträchtlichen Raum (3461) einer anderen der zwei benachbarten Nuten (346) in Verbindung steht, um dadurch zu ermöglichen, dass die zwei benachbarten Nuten (346) miteinander verbunden sind.

4. Schraube (3) nach Anspruch 1, wobei sich die erste Schneidekante (3442) einer der jeweils zwei benachbarten Kerben (344) und die zweite Schneidekante (3444) einer anderen der jeweils zwei benachbarten Kerben (344) an einem Punkt treffen, von dem eine Referenzlinie (R2) definiert ist, wobei die erste Schneidekante (3442) mit Bezug auf die Referenzlinie (R2) in einem ersten Schneidewinkel (A4) abfällt, wobei die zweite Schneidekante (3444) mit Bezug auf die Referenzlinie (R2) in einem zweiten Schneidewinkel (A5) abfällt, wobei der erste Schneidewinkel (A4) und der zweite Schneidewinkel (A5) verschieden sind.

5. Schraube (3) nach Anspruch 1, wobei eine Grundlinie (R1) definiert ist, indem sie durch ein Zentrum jeder der Vielzahl von Nuten (346) verläuft und senkrecht zu einer Achse des Schafts (31) ist, wobei die obere Flankenfläche (341) mit Bezug auf die Grundlinie (R1) in einem oberen Flankenwinkel (A2) abfällt, wobei die untere Flankenfläche (342) mit Bezug auf die Grundlinie (R1) in einem unteren Flankenwinkel (A3) abfällt, wobei der obere Flankenwinkel (A2) und der untere Flankenwinkel (A3) verschieden sind.

6. Schraube (3) nach Anspruch 1, weiter umfassend eine Vielzahl von Hilfsgewinden (35), die spiralförmig auf dem Schaft (31) angeordnet ist, wobei die Vielzahl von Hilfsgewinden (35) ohne die Vielzahl von Kerben (344) und die Vielzahl von Nuten (346) gebildet ist.

## Revendications

1. Vis (3) capable de réduire un couple de perçage, comprenant une tige (31), une tête (32) disposée à une extrémité de ladite tige (31), une partie de perçage (33) disposée à une autre extrémité de ladite tige (31) et située à l'opposé de ladite tête (32), et une pluralité de filets de coupe (34) disposés en spirale sur ladite tige (31), chacun de ladite pluralité de filets de coupe (34) comprenant une surface de flanc supérieure (341), une surface de flanc inférieure (342) opposée à ladite surface de flanc supérieure (341), et un sommet de filet (343) formé à une convergence desdites surfaces de flanc supérieure et inférieure (341, 342),
une pluralité d'encoches (344) découpées dans ledit sommet de filet (343) pour définir ainsi une pluralité de parties de sommet espacées (345), chacune de ladite pluralité de parties de sommet espacées (345) étant formée entre deux encoches adjacentes (344), chacune de ladite pluralité d'encoches (344) ayant une première paroi de coupe (3441) et une seconde paroi de coupe (3443) qui convergent à une base (3445), ladite première paroi de coupe (3441) comportant un premier bord de coupe (3442) rencontrant à la fois lesdites surfaces de flanc supérieure et inférieure (341, 342), ladite seconde paroi de coupe (3443) comportant un second bord de coupe (3444) relié audit premier bord de coupe (3442) ;
**caractérisée par le fait qu'**une pluralité de rainures (346) sont formées de manière renfoncée sur ladite pluralité de parties de sommet (345) pour ainsi permettre à chacune desdites rainures (346) de former un bord de sommet supérieur (3411) et un bord de sommet inférieur (3421) qui rencontrent ladite surface de flanc supérieure (341) et ladite surface de flanc inférieure (342), respectivement, ladite pluralité d'encoches (344) et ladite pluralité de rainures (346) étant disposées, en coupe transversale, de manière alternée.

2. Vis (3) selon la revendication 1, dans laquelle ladite surface de flanc supérieure (341) et ladite surface de flanc inférieure (342) desdits filets de coupe (34) se présentent sous la forme de montées et descentes alternées pour permettre auxdits filets de coupe (34) d'avoir un agencement ondulé.

3. Vis (3) selon la revendication 1, dans laquelle chacune de ladite pluralité de rainures (346) a deux extrémités s'étendant dans deux encoches adjacentes (344), respectivement, et atteignant lesdites bases respectives (3445) desdites deux encoches adjacentes (344) pour ainsi définir un espace d'extension (3461) entre lesdites deux encoches adjacentes (344), ledit espace d'extension (3461) de l'une des deux rainures adjacentes (346) étant en communication avec ledit espace d'extension (3461) d'une autre desdites deux rainures adjacentes (346) pour ainsi permettre auxdites deux rainures adjacentes (346) d'être reliées l'une à l'autre.

4. Vis (3) selon la revendication 1, dans laquelle ledit premier bord de coupe (3442) de l'une desdites deux encoches adjacentes (344) et ledit second bord de coupe (3444) d'une autre desdites deux encoches adjacentes (344) se rencontrent à un point à partir duquel une ligne de référence (R2) est définie, ledit premier bord de coupe (3442) étant incliné par rapport à ladite ligne de référence (R2) selon un premier angle de coupe (A4), ledit second bord de coupe (3444) étant incliné par rapport à ladite ligne de référence (R2) selon un second angle de coupe (A5), ledit premier angle de coupe (A4) et ledit second angle de coupe (A5) étant différents.

5. Vis (3) selon la revendication 1, dans laquelle une ligne de base (R1) est définie par passage par un centre de chacune de ladite pluralité de rainures (346) et est normale à un axe de ladite tige (31), ladite surface de flanc supérieure (341) étant inclinée par rapport à ladite ligne de base (R1) selon un angle de flanc supérieur (A2), ladite surface de flanc inférieure (342) étant inclinée par rapport à ladite ligne de base (R1) selon un angle de flanc inférieur (A3), ledit angle de flanc supérieur (A2) et ledit angle de flanc inférieur (A3) étant différents.

6. Vis (3) selon la revendication 1, comprenant en outre une pluralité de filets auxiliaires (35) disposés en spirale sur ladite tige (31), ladite pluralité de filets auxiliaires (35) étant formés sans ladite pluralité d'encoches (344) et sans ladite pluralité de rainures (346) .
